# FASCICULE DE BREVET EUROPEEN

(11) **EP 2 105 368 B1**
(45) Date de publication et mention de la délivrance du brevet: **10.08.2011**
(21) Numéro de dépôt: 09003953.8
(22) Date de dépôt: 19.03.2009
(51) Int. Cl.: B61D 7/28, B61D 43/00, F04B 1/34, F04B 35/01, F04B 49/03

(54) **Circuit hydraulique pour wagon, en particulier une ballastiere**
Hydraulikkreislauf für Waggon, insbesondere einen Schotterwagen
Hydraulic circuit for a wagon, in particular a ballast wagon

(30) Priorité: 25.03.2008 FR 0801609
(43) Date de publication de la demande: 30.09.2009
(73) Titulaire: Société Nationale des Chemins de Fer Français, 75014 Paris (FR); HYDRO3m, 71230 Saint Vallier (FR)
(72) Inventeur: Chapiron, Stephane, 91250 Saintry / Seine (FR); Chopart, Jean-Pierre, 71100 Chalon/Saone (FR)
(74) Mandataire: Jouanneau, Lionel

(56) Documents cités:
- EP-A- 0 890 746
- FR-A- 2 592 849
- GB-A- 1 072 215

## Description

La présente invention se rapporte à un circuit hydraulique pour wagon de maintenance de voies ferrées, plus particulièrement à une ballastière, ou à un tel wagon.

Les ballastières sont des wagons contenant du ballast permettant à la fois leur transport jusqu'à un chantier de voies ferrées puis leur dépose sur ledit chantier.

Pour ce faire, une ballastière présente un corps creux formant un réservoir destiné à contenir le ballast et monté sur des boggies permettant sa circulation sur une voie ferrée.

La dépose et répartition du ballast sur la voie ferrée s'effectue par l'intermédiaire de trappes ménagées en partie inférieure du réservoir et équipées chacune d'un registre.

De manière générale une ballastière présente six registres, à savoir trois de chaque côté du réservoir réparti en un registre avant, un registre central et un registre arrière. Bien évidemment, selon les modèles, une ballastière peut présenter plus ou moins de registres répartis différemment.

Chaque registre est apte à être commandé manuellement par l'intermédiaire de leviers dont les commandes sont centralisées au niveau d'une plateforme du wagon.

Concernant la dépose du ballast sur la voie par ouverture des registres, la répartition du ballast est assurée par l'avancée lente, de l'ordre de quelques kilomètres par heure, et continue du wagon au cours de l'opération. Un arrêt du wagon serait susceptible d'entraîner la formation d'un tas de ballast qui pourrait causer le déraillement du wagon ou train suivant.

Un train de ballast peut comporter un nombre indéterminé de ballastières, classiquement entre trois et vingt-deux ballastières, qui sont activées les unes après les autres au fur et à mesure de l'utilisation du ballast.

Les manoeuvres d'ouverture et de fermeture des registres ainsi que de contrôle de la dépose du ballast sont effectuées par deux ou plusieurs opérateurs.

Un opérateur actionne les leviers d'ouverture et de fermeture des registres d'un wagon tandis qu'un deuxième opérateur marche à côté du wagon concerné, contrôle visuellement la dépose du ballast, et transmet les instructions appropriées à son collègue sur le wagon.

Comme expliqué précédemment, le train de ballastières ne doit pas s'arrêter pendant l'opération de dépose du ballast. Lorsque qu'une ballastière est vide, l'opérateur doit donc passer sur la ballastière suivante pour en actionner les leviers commandant les registres.

Bien que le train roule à faible vitesse, on comprend que ce changement de wagon pendant la marche du train peut s'avérer dangereuse, surtout lorsqu'un chantier se déroule de nuit ou lors d'intempéries, par exemple.

De fait, l'opérateur pilotant les registres n'est pas celui qui s'assure de la bonne dépose du ballast sur la voie. Il s'ensuit donc une transmission d'informations et d'instructions qui, considérant l'environnement sonore général d'un tel chantier, peut s'avérer délicate et conduire à des erreurs.

On connaît déjà des systèmes permettant une certaine mécanisation des registres. Dans ces systèmes chaque registre est apte à être actionné par un vérin hydraulique ou pneumatique commandable à distance par radiocommande avec identification radio de la ballastière active.

Toutefois, la mise en oeuvre de ces vérins nécessite une source d'énergie disponible apte à permettre leur actionnement.

Une première solution consiste à prévoir un wagon réservé à la fourniture d'énergie pour l'ensemble des ballastières qui y sont raccordées. Ce wagon portera, par exemple, un générateur thermique engendrant une énergie pneumatique ou hydraulique qui sera ensuite distribuée aux ballastières par raccordement en chaîne.

Une telle solution présente plusieurs inconvénients. Tout d'abord, un tel wagon dédié à la production d'énergie sera nécessaire quel que soit le nombre de ballastières utilisées sur le chantier. Un générateur thermique est en outre polluant. Ensuite, on notera que dans le cas de trains de nombreuses ballastières, il s'ensuivra une perte de charge importante entre la première ballastière et la dernière ballastière, ce qui risque d'entraîner une surconsommation de carburant.

Enfin, cela nécessite une compatibilité de raccordement entre les wagons. Dans le cas d'un parc ancien de ballastières, une telle solution est difficilement applicable sans remplacer le parc, généralement à grands frais.

On notera que les registres sont classiquement actionnés manuellement. La puissance nécessaire reste donc relativement faible et la mise en oeuvre d'un générateur thermique peut paraître disproportionnée.

Une autre solution permet d'équiper chaque ballastière de sa propre source d'énergie. Il s'agit d'un système d'accumulation d'énergie hydraulique ou pneumatique fournie par l'essieu. Dans un tel système, un essieu de la ballastière est relié à une pompe qui permet la mise sous pression d'un réservoir de fluide lors du roulage de la ballastière jusqu'au chantier. Confére par example FR 2592849.

Une fois sur le chantier, le fluide sous pression peut être utilisé comme source d'énergie hydraulique pour commander les vérins des registres.

Un tel système présente également plusieurs inconvénients. Tout d'abord, l'accumulation de l'énergie ne peut se faire que lorsque le train roule suffisamment vite pour que la pompe puisse délivrer du fluide sous pression, ce qui s'effectue généralement à une vitesse d'entraînement minimale de la pompe d'environ 200 tours par minute. L'accumulation d'énergie s'effectue donc uniquement pendant la phase d'acheminement du ballast sur le chantier. Sur le chantier, le train roule à une vitesse trop faible pour que la pompe puisse délivrer suffisamment de débit à la pression utile.

Ainsi, pour qu'un tel système fonctionne, il est nécessaire que le train ait roulé à grande vitesse, typiquement une centaine de kilomètres par heure, sur une distance suffisante. La quantité d'énergie pneumatique ou hydraulique réellement accumulée est ensuite difficilement contrôlable en fonction des variations de température et de la distance.

Si la distance est trop courte, l'énergie accumulée risque d'être insuffisante pour terminer l'opération de dépose du ballast.

On notera également qu'en cas de fuite du réservoir de fluide sous pression, il y aura une perte d'énergie non compensable. Il convient donc de prévoir une marge de sécurité importante dans la quantité d'énergie accumulée.

Il existe donc un besoin pour un système fiable et autonome, permettant la mécanisation de ballastières existante.

La présente invention se rapporte à un circuit hydraulique comprenant au moins une pompe hydraulique à distribution mixte hydrostatique présentant une sortie de fluide à destination d'au moins un vérin et une alimentation en fluide, caractérisée en ce que l'alimentation en fluide est équipée d'un clapet de fermeture automatique monté mobile entre une position d'ouverture dans laquelle il permet le passage du fluide et l'alimentation de la pompe et une position de fermeture dans laquelle il vient au contact d'un siège de manière à obturer le passage du fluide et empêcher l'alimentation de la pompe, le clapet mobile étant monté à l'encontre d'un moyen de retour élastique tendant à son ouverture et exerçant une force de rappel inférieure à la force d'aspiration s'exerçant sur le clapet au delà d'une valeur de débit d'aspiration prédéterminée.

Ce type de pompe est déjà connu, notamment des documents FR 2 688 034 et FR 2 657 125.

Il a été constaté de manière surprenante et expérimentale que ces pompes peuvent également être utilisées à faible vitesse d'entraînement de leur arbre. En effet, il est apparu que ce type de pompe peut commencer à fonctionner et pomper un fluide de manière utile à une vitesse d'entraînement comprise entre 10 et 100 tours par minute.

La découverte surprenante et expérimentale de cette possibilité d'utiliser une telle pompe à des vitesses de rotation faibles comprises sensiblement entre 10 et 100 tours par minute en fait un type de pompe particulièrement adaptée à l'application considérée. Ainsi, une telle pompe peut être utilisée directement pendant l'opération de dépose du ballast pour délivrer une puissance hydraulique pendant que la ballastière roule à faible vitesse, un essieu de cette dernière entraînant l'arbre de la pompe.

Par ailleurs, une telle pompe pouvant également fonctionner à grande vitesse d'entraînement, elle ne risque pas d'être endommagée pendant l'étape d'acheminement du train, et il n'est donc éventuellement pas nécessaire de la débrayer de son essieu d'entraînement pendant cette étape.

Il reste bien évidemment possible d'utiliser une pompe fonctionnant à plus grande vitesse dont l'arbre sera entraîné indirectement par l'essieu du wagon par l'intermédiaire d'un système de multiplicateur de vitesse à engrenages.

Par ailleurs, en adaptant un tel circuit sur une ballastière selon l'invention, l'alimentation de la pompe en fluide est automatiquement coupée lorsque la vitesse d'aspiration dépasse une certaine valeur prédéterminée. De cette manière, l'énergie hydraulique n'est disponible que lors des opérations de dépose de ballast à faible vitesse. Lors de la phase d'acheminement, la vitesse d'entraînement de la pompe étant beaucoup plus importante, le débit de fluide augmente jusqu'à dépasser la valeur seuil prédéterminée au-delà de laquelle le clapet est aspiré en position de fermeture malgré son organe de rappel. Ainsi, lors de la phase d'acheminement, le fluide d'alimentation de la pompe n'est plus pompé inutilement.

Généralement, le fluide hydraulique est de l'huile, qu'il est préférable de choisir biodégradable compte tenu des préoccupations de protection de l'environnement

Avantageusement, le clapet est muni d'un moyen de réouverture automatique. Ainsi, une fois la ballastière arrivée sur le chantier et prête pour l'opération de dépose, il suffit de laisser s'ouvrir le clapet pour permettre la réalimentation de la pompe afin qu'elle délivre le fluide sous pression aux vérins d'actionnement.

Avantageusement encore, l'alimentation en fluide de la pompe comprend un circuit de dérivation contournant le clapet et apte à permettre un écoulement goutte-à-goutte du fluide d'alimentation.

Dans un tel cas, la fermeture du clapet empêche l'alimentation de la pompe en fluide hydraulique. Toutefois, une très petite quantité de fluide peut passer par le circuit de dérivation et alimenter la pompe. Bien évidemment, la quantité pouvant passer par le circuit de dérivation est insuffisante pour ramener la dépression dans le conduit d'alimentation de la pompe à un niveau suffisant pour permettre l'ouverture du clapet. Ainsi, tant que la ballastière roule à grande vitesse, le clapet est maintenu fermé.

Le fait qu'une faible quantité de liquide hydraulique alimente tout de même la pompe présente de nombreux avantages. Tout d'abord le liquide nouvellement admis vient refroidir l'ensemble du corps de pompe. Ainsi, il a été constaté une baisse de la température de la pompe jusqu'à vingt degrés pour un débit de 0,2 l par minute au lieu de 50 l par minute si la pompe était alimentée normalement. En effet, à grande vitesse et avec son alimentation coupée, la pompe peut atteindre une température jusque quarante degrés au dessus de l'ambiant. Par ailleurs, le débit de dérivation permet également de remplacer progressivement une partie du fluide hydraulique contenu dans le carter.

Lorsque la ballastière ralentit ou s'arrête, l'aspiration n'est plus entretenue. En l'absence du débit de dérivation, le clapet resterait toutefois fermé et devrait être rouvert manuellement. Le circuit de dérivation permet une réouverture automatique du clapet après un certain temps d'immobilisation. En effet, le débit de dérivation vient peu à peu remplir l'alimentation de la pompe et combler la dépression dans l'alimentation de cette dernière. Lorsque la valeur de dépression est suffisamment remontée, le moyen de rappel élastique du clapet permet sa réouverture.

De manière avantageuse, le débit de dérivation sera calculé de manière à ce que le clapet puisse se rouvrir dans un délai d'environ trois minutes après l'arrêt de la ballastière.

De manière préférentielle, le circuit de dérivation est réalisé sous la forme d'un siège du clapet présentant une étanchéité volontairement imparfaite. En effet, un tel circuit est moins susceptible de se boucher qu'un petit orifice ménagé dans un conduit alimentation et en communication avec le réservoir de fluide.

Avantageusement, la pompe est apte à opérer dans les deux sens de rotation de son arbre d'entrainement.

La présente invention se rapporte encore à un wagon comprenant au moins un organe mécanique destiné à être actionné par au moins un vérin, caractérisé en ce que le vérin est alimenté par un circuit hydraulique conforme à ce qui précède, la pompe étant montée sur un essieu du wagon.

Bien évidemment, la mécanisation d'un wagon n'est pas limitée à un circuit hydraulique tel que présenté précédemment.

La présente invention se rapporte ainsi également à un wagon comprenant au moins un organe mécanique destiné à être actionné par au moins un vérin, caractérisé en ce qu'il comprend un circuit hydraulique d'alimentation du vérin comportant une pompe dont l'arbre est apte à être entraîné par un essieu dudit wagon, la pompe étant apte à alimenter directement le vérin à faible vitesse de roulement du wagon.

Par ailleurs, le circuit hydraulique possède des moyens de débrayage de la pompe. Comme énoncé précédemment, cela évite à la pompe de faire circuler inutilement du fluide lors de l'étape d'acheminement.

Selon une première variante de réalisation possible, le débrayage s'effectue par déconnexion mécanique de la pompe de l'essieu l'entraînant.

Selon une deuxième variante de réalisation, le débrayage de la pompe s'effectue par coupure de l'alimentation du vérin par mise à vide du débit vers le réservoir.

Selon une troisième variante de réalisation, le débrayage de la pompe s'effectue par coupure de l'alimentation en fluide de la pompe.

Cette coupure peut etre réalisée par un clapet d'aspiration auto-obturant comme décrit ci-dessus ou par une électrovanne sur laquelle une fuite en dérivation sera prévue pour la lubrification de la pompe. Cette seconde solution présente l'avantage de la commande automatique et nécessite une source de puissance électrique continue lors de l'opération de dépose de ballast.

De manière préférentielle, le wagon est une ballastière comprenant au moins un registre destiné à l'écoulement de ballast et apte à être actionné par un vérin correspondant

De manière optimale, l'organe mécanique apte à être commandé par un vérin est également associé à un moyen de commande manuel.

De manière avantageuse, le ou les vérins sont associés à des moyens de commandes pilotables par radiocommande.

Ainsi, un seul opérateur peut, à l'aide d'une télécommande appropriée, commander l'ouverture des registres de la ballastière et contrôler visuellement la dépose du ballast sur la voie. L'opérateur peut simplement suivre le train sans avoir à passer de ballastière en ballastière pour actionner chacun des leviers alors que ces dernières roulent.

Bien évidemment, ce pilotage par radiocommande n'est pas limité à une ballastière, mais peut s'appliquer à tout type de wagon.

Chaque ballastière pourra être équipée d'un module récepteur radio possédant un identifiant unique permettant leur activation et commande successive par une seule télécommande.

Le module récepteur pourra être alimenté électriquement à l'aide d'un système de dynamo électrique et/ou de batteries.

La présente invention sera mieux comprise à l'aide de la description qui suit en référence au dessin schématique annexé sur lequel :
La figure 1 est une représentation schématique partielle d'un côté d'une ballastière selon l'art antérieur.

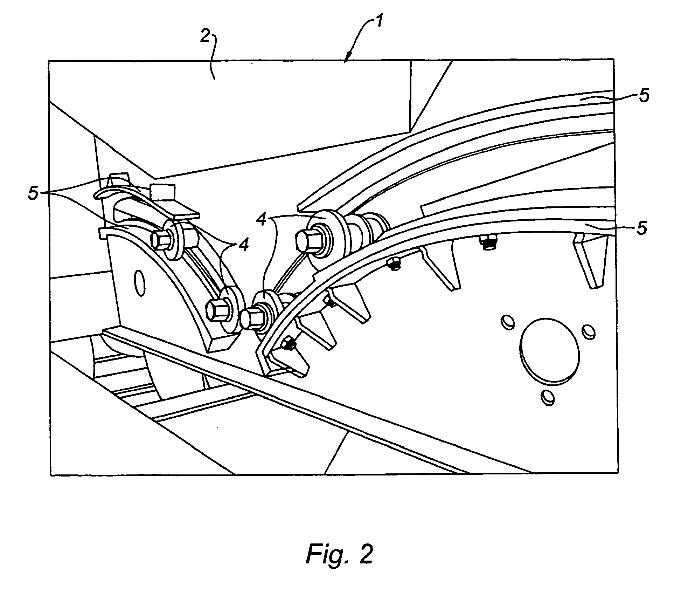

La figure 2 est une représentation schématique d'un système de registre équipant la ballastière de la figure 1.
La figure 3 est une représentation schématique du circuit d'actionnement hydraulique selon l'invention destiné à équiper la ballastière de la figure 1.
La figure 4 est une représentation en coupe d'un dispositif de clapet de coupure de l'alimentation de la pompe équipant le circuit hydraulique de la figure 3.

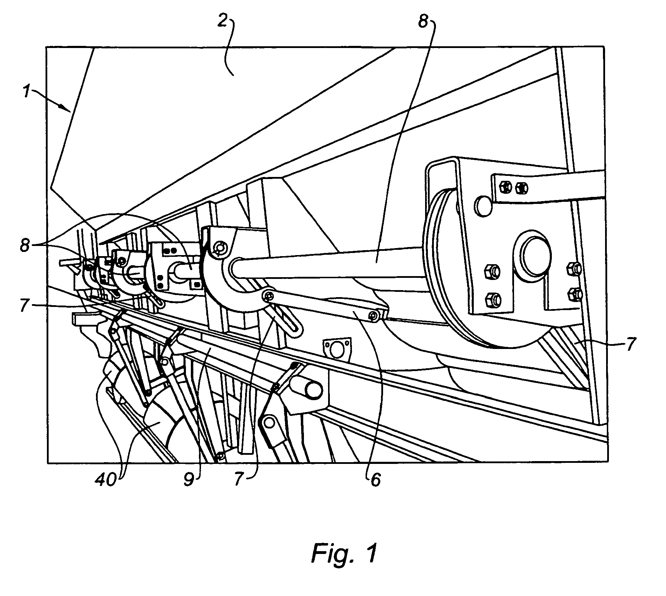

Une ballastière 1, telle que vue de côté sur la figure 1, comprend un corps creux 2 formant un réservoir destiné à contenir du ballast et est monté sur un ensemble d'essieux (non visibles) permettant sa circulation sur une voie ferrée.

Le réservoir constitue une trémie et présente en partie inférieure une pluralité de trappes (non visibles) comprenant chacune une ouverture apte à être obturée par un registre correspondant et par laquelle le ballast est destiné à s'écouler sur la voie à travers un distributeur associé.

La ballastière 1 présente ainsi trois trappes de chaque côté, à savoir, une trappe avant, une trappe centrale une trappe arrière.

Pour chaque trappe, le registre est apte à se déplacer à l'aide de galets 4 sur des guides 5 par l'intermédiaire d'une bielle 6 qui est elle-même emmené en translation par un guide oblong 7 soudé sur un tube de commande 8 apte à être emmené en rotation sur son axe à l'aide d'un levier de commande (non visible) avec mécanisme de cliquet et de verrou.

L'ensemble des leviers de commande est centralisé au niveau d'une plateforme d'extrémité de la ballastière 1.

Pour des raisons d'encombrement, les tubes de commande 8 de chaque registre sont coaxiaux. Le tube de plus gros diamètre commandera le premier registre, le tube de diamètre intermédiaire commandera le registre central et le tube de plus faible diamètre commandera le dernier registre.

Des distributeurs 40 sont disposés sous chaque trappe et servent à orienter l'écoulement du ballast vers l'extérieur des rails ou vers l'intérieur des rails.

La position des distributeurs 40 disposés sous chaque trappe peut également être commandée selon le même principe par un tube de commande 9. Toutefois, cette commande peut être unique pour l'ensemble des distributeurs 40 d'un même côté, et ne nécessite généralement pas de modification en cours d'opération de dépose du ballast car ils sont affectés au garnissage d'intérieur des rails ou d'extérieur des rails en début de travaux. Il n'est donc pas nécessaire de la mécaniser.

La présente invention vise à permettre la mécanisation d'une ballastière 1 existante telle que décrite précédemment.

Pour ce faire, les leviers de commandes des registres sont associés chacun à un vérin de commande apte à être piloté par un système de radiocommande.

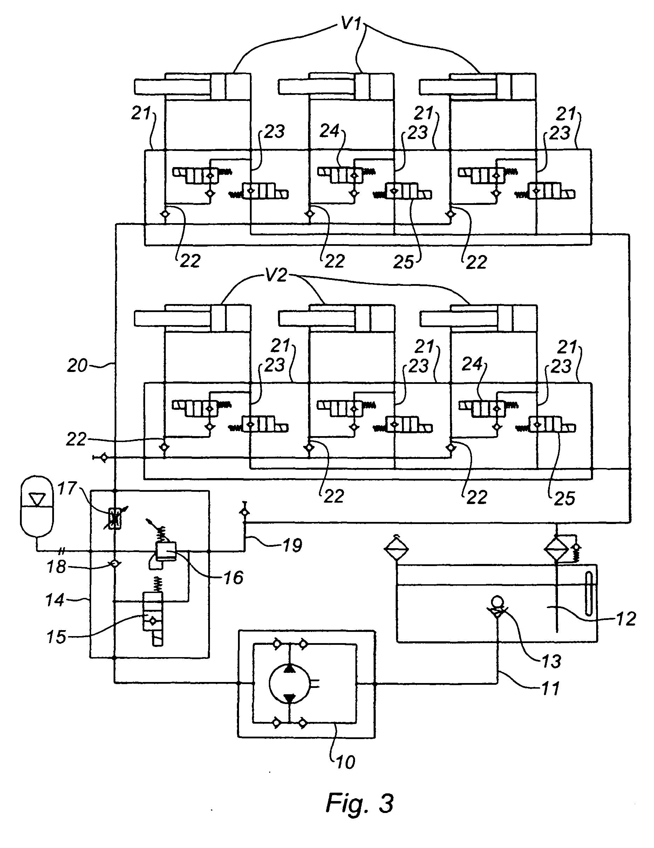

L'ensemble des vérins V1, V2 est alimenté par un circuit hydraulique tel que schématiquement représenté sur la figure 3.

Un tel circuit hydraulique comprend une pompe 10 du type à distribution mixte à équilibrage hydrostatique comprenant un arbre entraîné directement par un essieu de la ballastière 1.

Bien évidemment, d'autres types de pompes appropriées peuvent être utilisés, éventuellement en utilisant un entraînement par l'intermédiaire d'un multiplicateur de vitesse.

La pompe 10 est conceptuellement capable de fonctionner en pompe dans les deux sens de rotation de son arbre d'entrainement.

La pompe 10 est alimentée en fluide, typiquement de l'huile, par réservoir 12 à travers un conduit d'alimentation 11.

Le conduit d'alimentation est équipé d'un clapet d'aspiration 13 qui sera décrit ultérieurement.

La pompe 10 envoie le fluide pompé vers un bloc pression 14 comprenant un distributeur 15, un limiteur 16 apte à limiter la pression du circuit à environ 160 bar, par exemple, un régulateur de débit compensé 17 et un clapet antiretour 18.

Le bloc pression 14 possède une première sortie 19 permettant de retourner le fluide vers le réservoir 12 en cas de surpression ou d'inutilisation du circuit (le distributeur 15 est en position permettant la circulation du fluide directement vers cette sortie sur la figure 3).

Le bloc pression possède une deuxième sortie 20 à destination de blocs d'alimentation 21 des vérins V1, V2.

Chaque bloc d'alimentation 21 comprend une entrée de fluide sous pression 22 et une sortie 23 du fluide.

Un premier distributeur 24 permet d'orienter le fluide vers la chambre annulaire seulement ou vers les deux chambres simultanément du vérin correspondant et un deuxième distributeur 25 permet d'autoriser la sortie du fluide de la grande chambre du vérin vers le réservoir. Les diverses combinaisons des positions de ces deux distributeurs 24, 25 (passage autorisé ou passage bloqué) permettent de contrôler le déploiement et la rétractation de chaque vérin, et donc la rotation des leviers correspondant sur lesquels il agissent.

L'ensemble des distributeurs équipant le circuit hydraulique est apte à être commandé par radiocommande par un bloc récepteur disposé sur la ballastière et apte à recevoir et traduire des commandes émises par une télécommande destinée à équiper l'opérateur surveillant la manoeuvre.

L'énergie électrique nécessaire à la commande et à l'actionnement des distributeurs pourra être fournie par une dynamo disposée sur un essieu et/ou par un système de batteries.

Bien évidemment, chaque bloc récepteur contiendra un code d'identification unique qui, entré sur la télécommande, permettra de piloter uniquement la ballastière souhaitée.

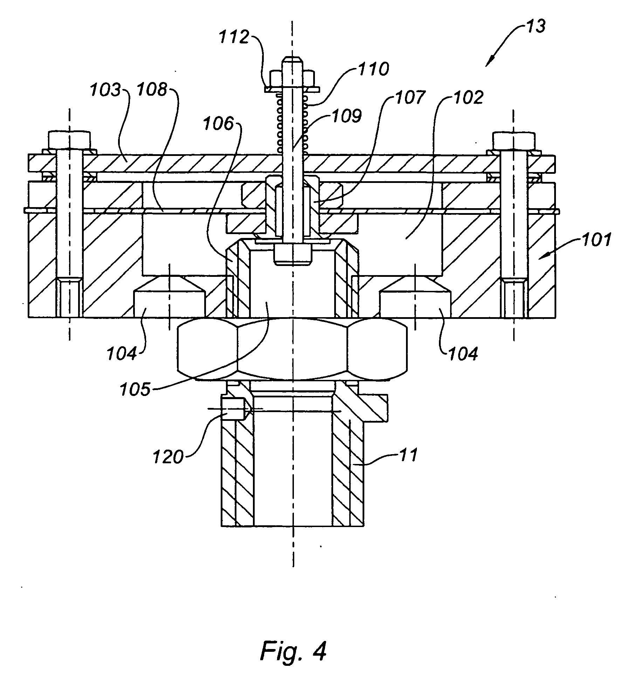

La figure 4 représente un mode de réalisation du clapet d'aspiration 13.

Un tel clapet d'aspiration 13 présente un corps 101 comportant un évidemment central formant une chambre 102 et un couvercle 103.

Le corps 101 présente également des orifices 104 d'entrée du fluide dans la chambre et un orifice 105 central de sortie du fluide destiné à étre relié à la conduite 11 du circuit hydraulique.

L'orifice 105 central comporte un bord périphérique 106 s'étendant partiellement à l'intérieur de la chambre 102 et formant un siège pour un clapet 107.

Le clapet 107 est monté mobile sur une membrane 108 s'étendant à travers le corps 101 et recouvrant la chambre 102 et est guidé en translation par une tige 109 traversant un orifice du couvercle 103. La membrane 108 assure ainsi l'étanchéité de l'ensemble.

Le clapet 107 et la tige 109 sont montés à l'encontre d'un moyen de rappel élastique, typiquement un ressort 110, tendant à l'ouverture du clapet 107.

Plus précisément, le ressort 110 est disposé autour de la tige 109 et prend appui d'une part sur le couvercle 102 et d'autre part sur un épaulement 112 terminal de la tige 109.

Ainsi, lorsque le clapet 107 est en position de fermeture, contre le siège 106, le ressort 110 est comprimé et tend à ramener le clapet 107 vers une position d'ouverture permettant le passage du fluide de la chambre 102 vers le conduit 11 à travers l'orifice de sortie 105.

La raideur du ressort 110 est calculée pour exercée sur le clapet 107, une force de rappel légèrement inférieure à une valeur seuil d'aspiration.

Ainsi, lorsque la force d'aspiration de la pompe 10 dépasse ladite valeur seuil, le clapet 107 est aspirée contre le siège 106 et vient fermer l'orifice 105, le ressort 110 n'étant alors pas assez puissant pour s'opposer à la force d'aspiration et maintenir l'ouverture du clapet 107.

La pompe 10 n'est donc plus alimentée en fluide.

Afin de pouvoir réamorcer la pompe 10 lorsque la force d'aspiration de celle-ci est repassée en dessous de la valeur seuil, comme expliqué dans la description générale, un orifice 120 est pratiqué dans le conduit 11 en aval du clapet 107 et mis en communication avec le réservoir d'huile 12. Ainsi, une petite quantité de fluide peut s'écouler dans le conduit 11 et alimenter la pompe. Comme expliqué, ce débit de dérivation doit être maintenu suffisamment faible pour ne pas suffire à lui-même à combler la dépression créée lorsque la pompe 10 est entraînée par l'essieu. En revanche, une fois la pompe 10 arrêtée, le débit de dérivation permet l'ouverture du clapet 107 dans un délai de quelques minutes.

Comme il va de soi l'invention ne se limite pas aux seules formes de réalisation décrites ci-dessus à titre d'exemples, mais elle embrasse au contraire toutes les variantes. Selon le jeu de revendications joint.

## Revendications

1. Circuit hydraulique comprenant au moins une pompe (10) hydraulique à distribution mixte à équilibrage hydrostatique présentant une sortie de fluide à destination d'au moins un vérin (V1, V2) et une alimentation en fluide (11), **caractérisée en ce que** l'alimentation en fluide est équipée d'un clapet (107) de fermeture automatique monté mobile entre une position d'ouverture dans laquelle il permet le passage du fluide et l'alimentation de la pompe et une position de fermeture dans laquelle il vient au contact d'un siège (106) de manière à obturer le passage du fluide et empêcher l'alimentation de la pompe, le clapet mobile étant monté à l'encontre d'un moyen de retour élastique (110) tendant à son ouverture et exerçant une force de rappel inférieure à la force d'aspiration s'exerçant sur le clapet au delà d'une valeur de débit d'aspiration prédéterminée.

2. Circuit hydraulique selon la revendication 1, **caractérisé en ce que** le clapet (107) est muni d'un moyen de réouverture automatique.

3. Circuit hydraulique selon la revendication 1, **caractérisé en ce que** l'alimentation (11) en fluide de la pompe (10) comprend un circuit de dérivation (120) contournant le clapet (107) et apte à permettre un écoulement goutte-à-goutte du fluide d'alimentation.

4. Circuit hydraulique selon la revendication 3, **caractérisé en ce que** le circuit de dérivation est réalisé sous la forme d'un siège du clapet (107) présentant une étanchéité volontairement imparfaite.

5. Circuit hydraulique selon l'une quelconque des revendications 1 à 4, **caractérisé en ce que** la pompe (10) est apte à opérer dans les deux sens de rotation de son arbre d'entrainement

6. Wagon comprenant au moins un organe mécanique destiné à être actionné par au moins un vérin (V1, V2), **caractérisé en ce que** le vérin est alimenté par un circuit hydraulique selon l'une quelconque des revendications 1 à 5, la pompe (10) étant montée sur un essieu du wagon.

7. Wagon comprenant au moins un organe mécanique destiné à être actionné par au moins un vérin (V1, V2), **caractérisé en ce qu'**il comprend un circuit hydraulique selon revendication 1, d'alimentation du vérin comportant la dite pompe (10) dont un arbre moteur est apte à être entraîné par un essieu dudit wagon, la pompe étant apte à alimenter directement le vérin à faible vitesse de roulage du wagon.

8. Wagon selon la revendication 7, **caractérisé en ce que** le circuit hydraulique possède des moyens de débrayage (13) de la pompe (10).

9. Wagon selon la revendication 8, **caractérisé en ce que** le débrayage s'effectue par déconnexion de la pompe (10) de l'essieu l'entraînant.

10. Wagon selon la revendication 8, **caractérisé en ce que** le débrayage de la pompe (10) s'effectue par coupure de l'alimentation du vérin en utilisant une mise à vide du débit vers le réservoir de la pompe.

11. Wagon selon la revendication 8, **caractérisé en ce que** le débrayage de la pompe (10) s'effectue par coupure de l'alimentation (11) en fluide de la pompe.

12. Wagon selon la revendication 11, **caractérisé en ce que** ladite coupure d'alimentation en fluide est effectuée par une électrovanne sur laquelle est prévue une dérivation pour la lubrification de la pompe.

13. Wagon selon l'une quelconque des revendications 6 à 12, **caractérisé en ce qu'**il s'agit d'une ballastière (1) comprenant au moins un registre destiné à l'écoulement de ballast et apte à être actionné par un vérin (V1, V2) correspondant.

14. Wagon selon l'une quelconque des revendications 6 à 13, **caractérisé en ce que** l'organe mécanique apte à être commandé par un vérin (V1, V2) est également associé à un moyen de commande manuel.

15. Wagon selon l'une quelconque des revendications 6 à 14, **caractérisé en ce que** le ou les vérins (V1, V2) sont associés à des moyens de commande pilotables par radiocommande.

## Claims

1. A hydraulic circuit comprising at least one mixed-distribution hydraulic pump (10) with hydrostatic equilibration having a fluid outlet intended for at least one cylinder (V1, V2) and a fluid supply (11), **characterized in that** the fluid supply is equipped with an automatic closing valve (107) mounted movably between an opening position in which it allows the passage of fluid and the supply of the pump and a closed position in which it contacts a seat (106) so as to block the passage of the fluid and prevent the pump from being supplied, the mobile valve being mounted against an elastic return means (110) tending towards its opening and exerting a return force less than the suction force exerted on the valve beyond a predetermined suction flow value.

2. The hydraulic circuit according to claim 1, **characterized in that** the valve (107) is provided with an automatic reopening means.

3. The hydraulic circuit according to claim 1, **characterized in that** the supply (11) of fluid of the pump (10) comprises a bypass circuit (120) bypassing the valve (107) and able to allow a drop-to-drop flow of the supply fluid.

4. The hydraulic circuit according to claim 3, **characterized in that** the bypass circuit is made in the form of a seat of the valve (107) having deliberately imperfect sealing.

5. The hydraulic circuit according to any one of claims 1 to 4, **characterized in that** the pump (10) is capable of operating in both directions of rotation of its drive shaft.

6. A wagon comprising at least one mechanical member intended to be actuated by at least one cylinder (V1, V2), **characterized in that** the cylinder is supplied by a hydraulic circuit according to any one of claims 1 to 5, the pump (10) being mounted on a wheel shaft of the wagon.

7. A wagon comprising at least one mechanical member intended to be actuated by at least one cylinder (V1, V2), **characterized in that** it comprises a hydraulic circuit according to claim 1 for supplying a cylinder having said pump (10) whereof a motor shaft is capable of being driven by a wheel shaft of said wagon, the pump being capable of directly supplying the cylinder directly at a low moving speed of the wagon.

8. The wagon according to claim 7, **characterized in that** this hydraulic circuit has disengaging means (13) from the pump (10).

9. The wagon according to claim 8, **characterized in that** the disengagement is done by disconnecting the pump (10) from the wheel shaft driving it.

10. The wagon according to claim 8, **characterized in that** the disengagement of the pump (10) is done by cutting the supply of the cylinder by placing the flow towards the reservoir of the pump in a vacuum.

11. The wagon according to claim 8, **characterized in that** the disengagement of the pump (10) is done by cutting the supply (11) of fluid for the pump.

12. The wagon according to claim 11, **characterized in that** said fluid supply cutoff is done by a solenoid valve in which a bypass is provided to lubricate the pump.

13. The wagon according to any one of claims 6 to 12, **characterized in that** it involves a ballast pit (1) comprising at least one discharge gate intended for the flow of ballast and capable of being actuated by a corresponding cylinder (V1, V2).

14. The wagon according to any one of claims 6 to 13, **characterized in that** the mechanical member able to be controlled by a cylinder (V1, V2) is also associated with a manual control means.

15. The wagon according to any one of claims 6 to 14, **characterized in that** the cylinder(s) (V1, V2) are associated with remotely controllable control means.

## Patentansprüche

1. Hydraulikkreis, umfassend mindestens eine hydrostatische Hydraulikpumpe (10) mit variabler Wegeführung, die einen Fluidfluss erzeugt, mit dem mindestens ein Zylinder (V1, V2) beaufschlagt und eine Fluidzuleitung (11) gespeist werden, **gekennzeichnet dadurch, dass** die Fluidzuleitung mit einem zwischen einer geöffneten Stellung, die den Durchfluss von Fluid und das Speisen der Pumpe gestattet, und einer geschlossenen Stellung, in welcher Kontakt mit einem Sitz (106) hergestellt ist, so dass der Durchfluss von Fluid und das Speisen der Pumpe gesperrt sind, beweglich angeordneten automatisch schließenden Schließkörper (107) versehen ist, wobei der bewegliche Schließkörper gegen ein elastisches Mittel zur Rückstellung (110) angeordnet ist, das in Öffnungsrichtung wirkt und eine Rückstellkraft ausübt, welche geringer ist als die Ansaugkraft, die beim Überschreiten eines vorbestimmten Werts der Durchflussmenge der Ansaugung auf den Schließkörper ausgeübt wird,

2. Hydraulikkreis nach Anspruch 1 **gekennzeichnet dadurch, dass** der Schließkörper (107) mit einem Mittel zum automatischen Wiederöffnen versehen ist.

3. Hydraulikkreis nach Anspruch 1 **gekennzeichnet dadurch, dass** die Fluidzuleitung (11) zur Pumpe (10) einen Bypass (120) umfasst, welcher den Schließkörper (107) umgeht und geeignet ist, tropfenweisen Zufluss des zugeleiteten Fluids zu gestatten.

4. Hydraulikkreis nach Anspruch 3 **gekennzeichnet dadurch, dass** der Bypass in Form eines Sitzes für den Schließkörper (107) mit einer beabsichtigten Undichtigkeit ausgeführt ist.

5. Hydraulikkreis nach einem der Ansprüche 1 - 4 **gekennzeichnet dadurch, dass** die Pumpe (10) geeignet ist, in beiden Drehrichtungen der Antriebswelle betrieben zu werden.

6. Waggon mit mindestens einem mechanischen Organ, das zur Betätigung durch mindestens einen Zylinder (V1, V2) bestimmt ist, und **gekennzeichnet dadurch, dass** der Zylinder durch einen hydraulischen Kreis nach einem der Ansprüche 1-5 gespeist wird und die Pumpe (10) an einer Achse des Waggons angeordnet ist.

7. Waggon mit mindestens einem mechanischen Organ, das zur Betätigung durch mindestens einen Zylinder (V1, V2) bestimmt ist, und **gekennzeichnet dadurch, dass** er einen Hydraulikkreis nach Anspruch 1 zur Speisung des Zylinders beinhaltet, welcher die Pumpe (10), von der eine Antriebswelle durch eine Achse des Waggons angetrieben werden kann, umfasst, wobei Pumpe geeignet ist, den Zylinder bei geringer Fahrgeschwindigkeit des Waggons direkt zu speisen.

8. Waggon nach Anspruch 7 **gekennzeichnet dadurch, dass** der Hydraulikkreis Mittel zum Auskuppeln (13) der Pumpe (10) beinhaltet.

9. Waggon nach Anspruch 8 **gekennzeichnet dadurch, dass** das Auskuppeln durch Unterbrechung der Verbindung zwischen der Pumpe (10) und der Antriebsachse erfolgt.

10. Waggon nach Anspruch 8 **gekennzeichnet dadurch, dass** das Auskuppeln der Pumpe (10) durch Unterbrechen der Zuleitung zum Zylinder durch Ablaufenlassen des Fluids in den Speicher der Pumpe erfolgt.

11. Waggon nach Anspruch 8 **gekennzeichnet dadurch, dass** das Auskuppeln der Pumpe (10) durch Unterbrechung der Fluidzuleitung (11) der Pumpe erfolgt.

12. Waggon nach Anspruch 11 **gekennzeichnet dadurch, dass** die Unterbrechung der Fluidzuleitung durch ein Elektroventil, an welchem ein Bypass zur Schmierung der Punkte vorgesehen ist, erfolgt.

13. Waggon nach einem der Ansprüche 6 - 12 **gekennzeichnet dadurch, dass** es sich um einen Schotterwagen (1) handelt, welcher mindestens eine Klappe, die zum Entleeren des Schotters bestimmt und geeignet ist, durch einen entsprechenden Zylinder (V1, V2) betätigt zu werden, beinhaltet.

14. Waggon nach einem der Ansprüche 6 - 13 **gekennzeichnet dadurch, dass** dem mechanischen Organ, das zur Betätigung durch mindestens einen Zylinder (V1, V2) geeignet ist, weiterhin ein Mittel zur Betätigung von Hand zugeordnet ist.

15. Waggon nach einem der Ansprüche 6 - 14 **gekennzeichnet dadurch, dass** der oder die Zylinder (V1, V2) durch Funkfernsteuerung steuerbaren Betätigungsmitteln zugeordnet sind.
